(19) Europäisches Patentamt
European Patent Office
Office européen des brevets

(11) EP 1 236 759 A1

(12) EUROPEAN PATENT APPLICATION

(43) Date of publication:
**04.09.2002 Bulletin 2002/36**

(51) Int Cl.[7]: **C08J 5/18**, C08J 9/28

(21) Application number: **02004420.2**

(22) Date of filing: **26.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.02.2001 JP 2001055460**

(71) Applicant: **NITTO DENKO CORPORATION
Osaka (JP)**

(72) Inventors:
- **Yamaguchi, Mutsuko
Ibaraki-shi, Osaka (JP)**
- **Yamamura, Yutaka
Ibaraki-shi, Osaka (JP)**
- **Noumi, Shunsuke
Ibaraki-shi, Osaka (JP)**
- **Nakamura, Seiji
Osaka-shi, Osaka (JP)**
- **Tabuchi, Masato
Osaka-shi, Osaka (JP)**

(74) Representative: **Grünecker, Kinkeldey,
Stockmair & Schwanhäusser Anwaltssozietät
Maximilianstrasse 58
80538 München (DE)**

(54) **Porous film, process for producing the same, and uses thereof**

(57) A porous film having high strength, homogeneous porous structure, and excellent affinity for electrolytic solutions and suitable for use as a separator for batteries and capacitors; a process for producing the film; and a battery and capacitor each employing the porous film as a separator. The porous film comprises a resin composition including from 70 to 99.9% by weight of an high molecular weight polyolefin resin and from 0.1 to 30% by weight of a polymer having a polyacrylate, polymethacrylate, poly (ethylene oxide), poly (propylene oxide), poly(ethylene propylene oxide), polyphosphazene, poly(vinyl ether) or polysiloxane structure as or in a main chain and having a chain oligo (alkylene oxide) structure in side chains. The porous film can be obtained by heating and kneading the high molecular weight polyolefin resin and the polymer in a solvent to thereby obtain a kneaded product, forming the kneaded product into a gel-state sheet, rolling and/or stretching the sheet, and then subjecting the sheet to a solvent-removing treatment.



Printed by Jouve, 75001 PARIS (FR)

## Description

### FIELD OF THE INVENTION

The present invention relates to a porous film suitable for use as a separator in batteries or capacitors and to a process for producing the same. More particularly, the invention relates to a porous film which is made of a resin composition comprising a high molecular weight polyolefin resin preferably comprising an ultrahigh molecular weight polyolefin resin and a polymer having a chain oligo(alkylene oxide) structure in side chains, has high strength and a homogeneous porous structure and, in particular, an excellent affinity for electrolytic solutions, and can hence be advantageously used as the separator of a battery or capacitor, and to a process for producing the film. The invention further relates to a battery and a capacitor each employing the porous film as a separator.

### DESCRIPTION OF THE RELATED ART

Various batteries have hitherto been put to practical use. Lithium batteries are recently attracting attention so as to cope with the trend toward cordless electronic appliances, etc., because they are lightweight, capable of attaining a high electromotive force and high energy, and reduced in self-discharge. For example, cylindrical lithium ion secondary batteries are used in large quantities in portable telephones and notebook type personal computers, and are expected to be used in future as auxiliary power supplies for electric-vehicle batteries or fuel cells . These batteries are required to attain a further increase in capacity.

Examples of the negative-electrode materials used in such lithium batteries include lithium metal, lithium alloys, and intercalation compounds such as carbonaceous materials capable of occluding/releasing lithium ions. On the other hand, examples of the positive-electrode materials include oxides of transition metals such as cobalt, nickel, manganese, and iron and composite oxides of any of these transition metals with lithium.

In general, such a lithium battery has a separator interposed between the positive electrode and negative electrode so as to prevent these electrodes from coming into direct contact with each other and thus causing shortcircuiting. A porous film having many micropores is generally used as the separator for securing ion movements between the positive and negative electrodes. However, such porous films for use as separators are required to have various properties in relation to battery properties. In particular, high strength is greatly required.

That a porous film has high strength contributes to an improvement in battery fabrication efficiency and a reduction in internal shortcircuit rejection rate, leading to a reduced separator thickness and hence an improved capacity.

A process for producing a porous film usable as a battery separator has been disclosed in Japanese Patent Laid-Open No. 12756/1997. This process comprises dissolving high molecular weight polyethylene comprising ultrahigh molecular weight polyethylene in a solvent with heating to prepare a solution, forming a gel-state sheet therefrom, stretching the sheet, removing the residual solvent, and then heat-treating the sheet. In general processes for producing a porous film for use as a separator, a lowly polar polyolefin resin is formed into a sheet and then stretched at a high stretch ratio so as to impart high strength thereto, as in the above-described process of the related art.

On the other hand, the electrolytic solutions heretofore in use in, e.g., lithium batteries have high polarity so as to heighten the degree of dissociation of a lithium salt therein and, hence, have a poor affinity for polyolefin resins. Although battery fabrication usually include the steps of superposing and winding electrodes and a separator and subsequently impregnating the electrode-separator structure with an electrolytic solution, a longer time is required for the impregnation of the structure with an electrolytic solution when the separator has a poor affinity for the electrolytic solution. Because of this, there is a desire for a separator having a high affinity for electrolytic solutions from the standpoint of industrial production of batteries.

Use of a porous film, for example, as a battery separator generally leads to problems such as a reduced battery cycle life and reduced long-term stability when the porous film has poor retention of the electrolytic solution. In case where a porous film having an affinity for the electrolytic solution is used, ion permeation occurs evenly throughout the whole separator, whereby not only these problems are mitigated but also improvements are expected in discharge rate and low temperature characteristics.

In general, an electrolytic solution is prepared by dissolving an electrolyte in a mixture of a low viscosity solvent and a high viscosity solvent. Although the use of a high viscosity high boiling solvent is advantageous from the standpoint of improving the safety of the solution, high viscosity high boiling solvents have a poor affinity for porous polyolefin resin films such as those described above. Consequently, satisfactory battery properties have not been obtained. There is hence a strong desire for improvements in the properties of porous polyolefin resin films.

Japanese Patent Laid-Open No. 40128/1999 discloses a process for obtaining a solid electrolyte for battery separators. In this process, a mixture of a polymeric substance capable of retaining an electrolyte solution, e.g., a vinylidene fluoride/hexafluoropropylene copolymers, and a crystalline resin for imparting strength, such as a polyolefin

resin, is kneaded with heating, formed into a sheet, and then stretched to obtain a porous film. An electrolyte solution is infiltrated into the porous film and caused to gel to obtain the target solid electrolyte.

The solid electrolyte described above can be expected to attain an improvement in electrolytic solution retention due to the incorporation of that polymeric substance into a porous film made of a polyolefin resin. However, since the crystalline resin such as a polyolefin resin has poor compatibility with the polymeric substance capable of retaining an electrolyte solution, it is difficult to evenly disperse the polymeric substance in the crystalline resin. A mixture of these is hence apt to have a sea-island structure, i.e., the polymeric substance is apt to be unevenly distributed in the resin. As a result, the solid electrolyte obtained is apt to have uneven properties. The above-described process of the related art further has a drawback that the sheet stretching may result in interfacial separation between the resin and the electrolyte unevenly dispersed therein and this may lead to sheet breakage at the surfaces thus separated. Consequently, the sheet stretching cannot be conducted at a high stretch ratio and, hence, strength enhancement and thickness reduction by stretching are limited.

Furthermore, in the case where an ultrahigh molecular weight polyolefin resin is used as the resin, molecular chain entanglement occurs excessively, making it difficult to stretch the sheet obtained. Consequently, the polyolefin resins which can be used are limited to ones having a relatively low molecular weight. In this respect also, there are limitations on strength improvement of the porous film obtained by the above-described process of the related art.

## SUMMARY OF THE INVENTION

The invention has been achieved to overcome the above-described problems of porous films for use as, e.g., separators for batteries or capacitors.

One object of the invention is to provide a porous film which has a high strength, homogeneous porous structure, and excellent affinity for electrolytic solutions and is suitable for use as a separator for batteries and capacitors.

Another object of the invention is to provide a process for producing the film.

Still another of the invention is to provide a battery and capacitor each employing a separator comprising the porous film.

The invention provides a porous film comprising a resin composition which comprises from 70 to 99.9% by weight of a high molecular weight polyolefin resin and from 0.1 to 30% by weight of a polymer having a polyacrylate, polymethacrylate, poly(ethylene oxide), poly(propylene oxide), poly(ethylene propylene oxide), polyphosphazene, poly (vinyl ether) or polysiloxane structure as or in a main chain and having a chain oligo(alkylene oxide) structure in side chains.

The invention further provides a process for producing a porous film which comprises: heating and kneading in a solvent from 70 to 99.9% by weight of a high molecular weight polyolefin resin and from 0.1 to 30% by weight of a polymer having a polyacrylate, polymethacrylate, poly(ethylene oxide), poly(propylene oxide), poly(ethylene propylene oxide), polyphosphazene, poly(vinyl ether) or polysiloxane structure as or in a main chain and having a chain oligo (alkylene oxide) structure in side chains to thereby obtain a kneaded product; forming the kneaded product into a gel-state sheet; rolling and/or stretching the sheet; and then subjecting the sheet to a solvent-removing treatment.

The invention still further provides a separator comprising the porous film.

The invention furthermore provides a battery and a capacitor each employing the separator.

## DETAILED DESCRIPTION OF THE INVENTION

The porous film of the invention comprises a resin composition which comprises from 70 to 99.9% by weight of a high molecular weight polyolefin resin and from 0.1 to 30% by weight of a polymer having a polyacrylate, polymethacrylate, poly(ethylene oxide), poly(propylene oxide), poly(ethylene propylene oxide), polyphosphazene, poly(vinyl ether) or polysiloxane structure as or in a main chain and having a chain oligo(alkylene oxide) structure in side chains.

The high molecular weight polyolefin resin in the invention preferably comprises at least 30% by weight, more preferably from 50 to 100% by weight, of an ultrahigh molecular weight polyolefin resin. In case where the proportion of the ultrahigh molecular weight polyolefin resin in the high molecular weight polyolefin resin is lower than 30% by weight, there is a possibility that the porous film obtained has insufficient strength.

The ultrahigh molecular weight polyolefin resin for use in the invention has a weight average molecular weight of $1.0 \times 10^6$ or higher. Namely, the ultrahigh molecular weight polyolefin resin in the invention has a weight average molecular weight in the range of generally from $1.0 \times 10^6$ to $2.0 \times 10^7$, preferably from $1.5 \times 10^6$ to $1.5 \times 10^7$. Examples of the ultrahigh molecular weight polyolefin resin include homopolymers or copolymers of ethylene, propylene, 1-butene, 4-methyl-1-pentene and 1-hexene, andmixtures of these polymers. Especially preferred of these in the invention are ultrahigh molecular weight polyethylene resins.

That part of the high molecular weight polyolefin resin which is not an ultrahigh molecular weight polyolefin resin may be a high molecular weight polyolefin resin having a weight average molecular weight of usually from $1.0 \times 10^4$

to less than $1.0x10^6$, preferably from $5.0x10^4$ to $5.0x10^5$. As in the case of the ultrahigh molecular weight polyolefin resin described above, examples of such a polyolefin resin include homopolymers or copolymers of ethylene, propylene, 1-butene, 4-methyl-1-pentene and 1-hexene, and mixtures of these polymers. Especially preferred of these are high density polyethylene, low density polyethylene, and polypropylene.

The polymer which, in cooperation with the high molecular weight polyolefin resin, constitutes the porous film of the invention has a polyacrylate, polymethacrylate, poly(ethylene oxide), poly(propylene oxide), poly(ethylene propylene oxide), polyphosphazene, poly(vinyl ether), or polysiloxane structure as or in the main chain and further has a chain oligo(alkylene oxide) structure in side chains.

Preferred among such polymers in the invention are ether multicomponent polymers which have apoly (ethylene oxide), poly(propylene oxide), or poly(ethylene propylene oxide) structure as or in the main chain and further have a chain oligo(alkylene oxide) structure in side chains. Especially preferred is a ether multicomponent polymer which has a poly(ethylene oxide) or poly(ethylene propylene oxide) structure as or in the backbone and further has a chain oligo(ethylene oxide) structure, chain oligo(propylene oxide) structure, or chain oligo(ethylene propylene oxide) structure (in particular, a chain oligo(ethylene oxide) structure or chain oligo (propylene oxide) structure, especially the former) in side chains.

Such ether multicomponent polymers are described in, e.g., Japanese Patent Laid-Open Nos. 154736/1988, 324114/1997, 130487/1998, 176105/1998, and 204172/1998. Although such ether multicomponent polymers are already known, an explanation will be made thereon below.

An ether multicomponent polymer which can be advantageously used in the invention is one obtained from monomer components comprising from 1 to 99% by mole, preferably from 2 to 95% by mole, of a component represented by the following formula (1) and from 99 to 1% by mole, preferably from 98 to 5% by mole, of a component represented by the following formula (2), i.e., comprises repeating structural units represented by the following formulae (3) and (4), and has a weight average molecular weight of from $10^4$ to $10^7$.

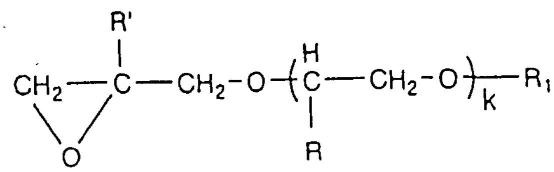

(1)

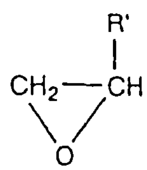

(2)

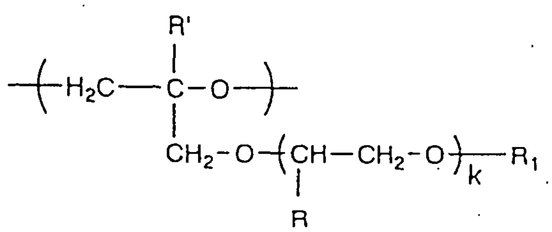

(3)

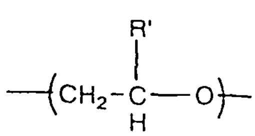

(4)

In formulae (1) and (3), R and R' each independently represent a hydrogen atom or a methyl group; $R_1$ represents a group selected from the group consisting of an alkyl group having 1 to 12 carbon atoms, an alkenyl group having 2 to 8 carbon atoms, a cycloalkyl group having 3 to 8 carbon atoms, an aryl group having 6 to 14 carbon atoms, and an aralkyl group having 7 to 12 carbon atoms; and k, indicating the degree of polymerization of the oxyalkylene

unit constituting a side chain part, is from 1 to 12. In formulae (2) and (4), R' represents a hydrogen atom or a methyl group.

Such an ether multicomponent polymer used in the invention is obtained, for example, by reacting monomers respectively represented by formulae (1) and (2) at a temperature of from 10 to 80°C with stirring in the presence or absence of a solvent using a catalyst for ring-opening polymerization. Examples of the catalyst include a catalyst system mainly comprising an organoaluminum compound, a catalyst system mainly comprising an organozinc compound, and a catalyst system comprising an organotin/phosphoric ester condensate. Especially preferred of these is the organotin/phosphoric ester condensate catalyst system from the standpoints of the degree of polymerization and properties of the ether multicomponent polymer to be obtained, etc.

In case where the proportion of the monomer represented by formula (2) in producing an ether multicomponent polymer exceeds 99% by mole, the ether multicomponent polymer obtained has an elevated glass transition temperature and undergoes crystallization of the oxyethylene chains. As a result, use of this ether multicomponent polymer gives a porous film having a reduced affinity for electrolytic solutions.

In the monomer component represented by formula (1), R' represents a hydrogen atom or a methyl group. In the oxyalkylene units in formula (1), Rs each independently represent a hydrogen atom or a methyl group. Namely, all the Rs may be hydrogen atoms or may be methyl groups, or part of the Rs may be hydrogen, with the remainder being methyl. Consequently, the oxyalkylene units may be either oxyethylene units or oxypropylene units or oxyethylene propylene units. However, the oxyalkylene units are preferably oxyethylene units or oxypropylene units, and more preferably oxyethylene units. The degree of polymerization, k, of the oxyalkylene unit is preferably from 1 to 12. In case where the degree of polymerization k exceeds 12, the high molecular weight polyolefin resin has reduced suitability for kneading and hence gives a porous film having impaired homogeneity. As a result, the porous film cannot have the desired satisfactory affinity for electrolytic solutions.

The molecular weight of the ether multicomponent polymer to be used in the invention is in the range of generally from $10^4$ to $10^7$, preferably from $10^5$ to $5x10^6$, in terms of weight average molecular weight from the standpoint of obtaining processability, moldability, mechanical strength and flexibility. In case where the weight average molecular weight thereof is lower than $10^4$, this ether multicomponent polymer, when kneaded together with a high molecular weight polyolefin resin, differs considerably in flowability from the polyolefin resin, and the resulting composition cannot give a homogeneous porous film. As a result, a porous film having the desired satisfactory affinity for electrolytic solutions cannot be obtained. On the other hand, in case where the weight average molecular weight of the ether multicomponent polymer exceeds $10^7$, this ether multicomponent polymer has too high a viscosity during kneading and is hence poorly suitable for kneading.

Although the ether multicomponent polymer used in the invention may be either a block copolymer or a random copolymer, it is preferably a random copolymer.

Examples of the monomer component represented by formula (1) include diethylene glycol glycidyl methyl ether and dipropylene glycol glycidyl methyl ether. A mixture of two or more of such monomers may be used in the invention.

The examples of the monomer component represented by formula (2) are ethylene oxide and propylene oxide. A mixture of these two monomers may be used in the invention.

According to the invention, the polymer having a poly(ethylene oxide), poly(propylene oxide) or poly(ethylene propylene oxide) structure as or in the backbone and having a chain oligo(alkylene oxide) structure in side chains, especially preferably the ether multicomponent polymer described above, has excellent dispersibility in high molecular weight polyolefin resins. Consequently, according to the invention, a homogenous porous film having high strength can be obtained from a resin composition comprising a high molecular weight polyolefin resin and the polymer, preferably the ether multicomponent polymer, by the method which will be described later.

By thus using the polymer described above, in particular the ether multicomponent polymer, together with a high molecular weight polyolefin resin, preferably an ultrahigh molecular weight polyolefin resin, affinity for electrolytic solutions, i.e., wettability by electrolytic solutions, can be improved without impairing the strength of the porous film obtained. The use of these two kinds of polymeric materials further had the following effect. When the polymer is kneaded together with the ultrahigh molecular weight polyolefin resin, molecular chains of the ultrahigh molecular weight polyolefin resin are highly entangled with one another or with molecular chains of the polymer. Because of this, the polymer is evenly dispersed in the high molecular weight polyolefin resin without unevenly distributed therein. As a result, a porous film having even properties, i.e., free from local differences in property, can be obtained.

The porous film of the invention comprises a resin composition comprising from 70 to 99.9% by weight of the high molecular weight polyolefin resin and from 0.1 to 30% by weight of the polymer, and preferably comprises a resin composition comprising from 80 to 99% by weight of the high molecular weight polyolefin resin and from 1 to 20% by weight of the polymer. In case where the proportion of the polymer is lower than 0.1% by weight, the porous film obtained cannot have improved wettability by electrolytic solutions. On the other hand, in case where the proportion of the polymer is higher than 30% by weight, the polymer has poor compatibility with and hence poor dispersibility in

the high molecular weight polyolefin resin. As a result, the porous film obtained has not only poor homogeneity but poor strength. Furthermore, the porous film obtained has poor air permeability and is hence unusable as a practical separator in batteries or capacitors.

The porous film of the invention may suitably contain any of various additives, e.g., an antioxidant, ultraviolet absorber, and antistatic agent, and one or more other resins for improving properties of the separator to be obtained, as long as such optional components do not impair the desirable properties of the film.

The porous film of the invention can be obtained by heating and kneading a high molecular weight polyolefin resin and the polymer in a solvent, forming the resulting kneading product into a gel-state sheet, rolling and/or stretching the sheet, and then removing the solvent therefrom.

The solvent is preferably one in which the high molecular weight polyolefin resin dissolves well and which has a solidifying point of -10°C or lower. Although the range of solidifying point is not particularly limited, solvents having a solidifying point in the range of from -10°C to -45°C are preferred in the invention. Preferred examples of such solvents include aliphatic or cyclic hydrocarbons such as decane, decalin, and liquid paraffins and mineral oil fractions having the same solidifying point as any these solvents. Preferred of these are nonvolatile solvents such as liquid paraffins. Especially preferred is a nonvolatile solvent having a solidifying point of -15°C or lower and a dynamic viscosity as measured at 40°C of 65 cSt or lower.

The amount of the solvent to be used in preparing the kneading product is not particularly limited. In general, however, the amount thereof is preferably in the range of from 70 to 95% by weight based on the kneading product from the standpoints of dissolving the high molecular weight polyolefin resin, enabling the resin to undergo moderate entanglement of molecular chains when kneaded together with the polymer, and obtaining a sheet capable of being rolled and/or stretched. In case where the amount of the solvent contained in the sheet obtained is too small, an increased stretching stress is necessary in rolling and/or stretching the sheet, making it difficult to conduct the stretching. On the other hand, too large solvent amounts result in a sheet which has poor self-supporting properties and is difficult to stretch.

The kneading product according to the invention can be obtained by adding a high molecular weight polyolefin resin to a solvent, heading this mixture to dissolve the high molecular weight polyolefin in the solvent, adding the polymer thereto, and kneading the resultant mixture. Alternatively, the kneading product may be obtained by adding a high molecular weight polyolefin resin and the polymer to a solvent and kneading the resulting mixture while heating it to dissolve the high molecular weight polyolefin resin in the solvent.

For dissolving the high molecular weight polyolefin resin comprising an ultrahigh molecular weight polyolefin resin in a solvent and for sufficiently entangling molecular chains of the high molecular weight polyolefin resin with one another, it is preferred to knead the mixture of the polyolefin resin, polymer, and solvent while applying a high shear force thereto. It is therefore preferred in the invention that the kneading of the liquid mixture comprising a solution of the polyolefin resin in a solvent be usually conducted with an apparatus capable of applying a high shear force to the mixture, such as, e.g., a kneader or a twin-screw extruder.

The kneading of the mixture in the invention is not particularly limited. However, it is usually conducted at a temperature in the range of from 115 to 185°C. In case where the kneading is conducted at too low a temperature, the high molecular weight polyolefin resin does not dissolve or diffuse in the solvent and, hence, molecular chains thereof cannot be sufficiently entangled with one another or with molecular chains of the polymer, making it impossible to obtain a porous film having high strength. On the other hand, in case where the kneading is conducted at too high a temperature, the high molecular weight polyolefin resin decomposes and come to have a reduced molecular weight. In this case also, a high strength porous film cannot hence be obtained.

Subsequently, the kneading product thus obtained, which consists of the high molecular weight polyolefin resin, polymer, and solvent, is cooled to a temperature not higher than the solidifying point of the solvent and formed into a gel-state sheet, according to the invention. This procedure according to the invention may be conducted in such a manner that the kneading product is cooled to crystallize the high molecular weight polyolefin resin and simultaneously formed into a sheet to thereby obtain a gel-state sheet. Alternatively, use may be made of a method in which the kneading product is formed into a sheet and this sheet is cooled to obtain a gel-state sheet and crystallize the high molecular weight polyolefin resin. For thus forming the kneading product into a gel-state sheet, use may be made of extrusion molding or a simple method in which the kneading product is pressed or rolled between a pair of pressure rolls or metal plates which have been cooled beforehand.

The thickness of the gel-state sheet is not particularly limited. However, it is usually preferably in the range of from 3 to 20 mm.

According to the invention, the gel-state sheet thus obtained is then subjected under given conditions to rolling, stretching, solvent removal, and then heat treatment (heat setting) to obtain the target porous film.

The gel-state sheet is rolled and/or stretched according to the invention at a temperature in the range of from (M+5)°C to (M-30)°C, wherein M is the melting point of the ultrahigh molecular weight polyolefin resin, to thereby obtain a stretched film. The stretching of the gel-state sheet may be uniaxial stretching or biaxial stretching. Although the

biaxial stretching may be either successive or simultaneous biaxial stretching, simultaneous biaxial stretching is preferred.

The terms "rolling ratio" and "stretch ratio" as used herein each mean an areal ratio calculated from the ratio between the thickness before the rolling or stretching treatment and that after the treatment. In the invention, overall stretch ratio is defined as the product of the rolling ratio and the stretch ratio.

The higher the overall stretch ratio in the invention, the more the stretched film is desirable from the standpoints of strength enhancement and thickness reduction. The overall stretch ratio is usually 25 or higher, and the upper limit thereof is usually 400.

The stretched film thus obtained is subjected to a solvent-removing treatment to convert it into a porous film. Preferred for use in this solvent-removing treatment is a highly volatile solvent. Examples of this solvent include hydrocarbons such as pentane, hexane, heptane, and decane, chlorohydrocarbons such as methylene chloride and carbon tetrachloride, fluorohydrocarbons such as trifluoroethane, and ethers such as diethyl ether and dioxane. A suitable one may be selected from the solvents according to the solvent used for preparing the kneading product.

The solvent-removing treatment of the stretched film may be accomplished, for example, by immersing the stretched film in the solvent for solvent removal to replace the solvent remaining in the stretched film with the solvent for solvent removal and then drying the stretched film.

A heat treatment (heat setting) maybe further conducted in the invention in order to prevent or reduce heat shrinkage of the porous film obtained. Usually, this heat treatment is preferably conducted by fixing the whole periphery of the porous film and then contacting the film with a heating roll or allowing the film to stand in a drying chamber. The temperature for this treatment is usually in the range of from 110 to 140°C, and the time period thereof is usually in the range of from 10 minutes to 2 hours. The heat treatment may be conducted in two steps in the invention according to need.

The thus-obtained porous film of the invention wholly has an excellent affinity for electrolytic solutions, probably because the polymer, especially the ether multicomponent polymer, is evenly dispersed in the fine three-dimensional network constituted of the high molecular weight polyolefin resin, while being entangled with molecular chains of the polyolefin resin. Furthermore, the porous film of the invention is thin and has high strength.

An electrolytic solution generally is a solution prepared by dissolving an electrolyte salt in an appropriate organic solvent. In the invention, the electrolytic solution is not particularly limited, and may be one suitably selected according to the desired properties or use. Examples of the electrolyte include salts formed from a cationic component such as hydrogen, an alkali metal, e.g., lithium, sodium, or potassium, an alkaline earth metal, e.g., calcium or strontium, or a tertiary or quaternary ammonium salt and an anionic component such as an inorganic acid, e.g., hydrochloric acid, nitric acid, phosphoric acid, sulfuric acid, borofluoric acid, hydrofluoric acid, hexafluorophosphoric acid, or perchloric acid or an organic acid such as a carboxylic acid, organic sulfonic acid, or fluorine-substituted organic sulfonic acid.

Preferred of those electrolyte salts in the invention are electrolyte salts formed from alkali metal ions as cationic components and inorganic acids or organic acids as anionic components. The organic acids are especially preferably trifluoroacetic acid and organic sulfonic acids. Examples of such electrolyte salts include alkali metal perchlorates such as lithium perchlorate, sodium perchlorate, and potassium perchlorate, alkali metal tetrafluoroborates such as lithium tetrafluoroborate, sodium tetrafluoroborate, and potassium tetrafluoroborate, alkali metal hexafluorophosphates such as lithium hexafluorophosphate, sodium hexafluorophosphate, and potassium hexafluorophosphate, alkali metal trifluoroacetates such as lithium trifluoroacetate, and alkali metal trifluoromethanesulfonates such as lithium trifluoromethanesulfonate.

In preparing the electrolytic solution, any organic solvent may be used without particular limitations, as long as the electrolyte salt to be used can dissolve therein. However, non-aqueous solvents are preferred. Examples thereof include cyclic esters such as ethylene carbonate, propylene carbonate, butylene carbonate, and γ-butyrolactone, ethers such as tetrahydrofuran and dimethoxyethane, and chain esters such as dimethyl carbonate and diethyl carbonate. These may be used alone or as a mixture of two or more thereof.

The concentration of the electrolyte salt in the electrolytic solution is not particularly limited. However, the concentration thereof is in the range of generally from 0.05 to 3 mol/l, preferably from 0.1 to 2 mol/l.

According to the invention, the thickness of the porous film can be regulated by regulating the thickness of the gel-state sheet formed from the kneading product or by controlling the rolling and/or stretch ratio during the rolling and/or stretching of the gel-state sheet. In the case where the porous film of the invention is to be used, for example, as a battery separator, it is regulated so as to have a thickness of generally from 1 to 100 µm, preferably from 5 to 50 µm, a porosity of generally from 20 to 80%, an air permeability of generally from 100 to 900 sec/100 ml, a piercing strength of generally 3 N or higher per 25 µm thickness, and an average pore diameter as measured by the BJH method of generally 0.2 µm or smaller, preferably from 0.01 to 0.05 µm.

Furthermore, the porous film of the invention has such a degree of affinity for an electrolytic solution that when the porous film is immersed in the electrolytic solution and the change in resistance of the film in the immersed state with time is examined, then the time period required for the resistance value to become constant is 15 seconds or

shorter, preferably 10 seconds or shorter.

The invention will be explained below by reference to Examples, but the invention should not be construed as being limited by these Examples in any way. The melting points of resins used and properties of the porous films obtained were evaluated by the following methods.

Weight Average Molecular Weight of Ultrahigh Molecular Weight Polyethylene Resin:

Measurement was made at a temperature of 135°C with a gel permeation chromatograph (GPC-150C, manufactured by Waters Inc.) using o-dichlorobenzene as a solvent and Shodex-80M (manufactured by Showa Denko K. K.) as a column. The data obtained were processed with a data processing system manufactured by TRC Co., Ltd. The molecular weight was calculated for standard polystyrene. Melting Point of Ultrahigh Molecular Weight Polyethylene Resin:

The onset temperature for a differential scanning calorimeter (DSC) was taken as the melting point of the resin. The measurement was made at a heating rate of 10°C/min.

Thickness of Porous Film:

Thickness was determined through a measurement with a 1/10,000 mm thickness gauge and examination of a scanning electron photomicrograph (enlargement: 10,000 magnifications) of a section of the porous film.

Porosity:

Porosity was calculated from the weight W (g) of the porous film per unit area S ($cm^2$), average thickness t (cm) of the porous film, and density d ($g/cm^3$) of the resin constituting the porous film using the following equation.

$$\text{Porosity (\%)} = (1-(100W/S/t/d)) \times 100$$

Air Permeability of Porous Film:

Measurement was made in accordance with JIS P 8117.

Piercing Strength of Porous Film:

A piercing test was conducted using compression tester KES-G5, manufactured by Kato Tec K.K. The maximum load was determined from the load-deformation curve obtained and the piercing strength per 25 µm thickness was determined therefrom. The needle used had a diameter of 1.0 mm and a radius of curvature of the point of 0.5 mm. The test was conducted at a needle speed of 2 cm/sec.

Average Pore Diameter of Porous Film:

Average pore diameter was determined from a pore diameter distribution curve obtained by the BJH method with nitrogen adsorption/desorption type specific surface area/pore distribution analyzer ASAP 2010, manufactured by Shimadzu Corp.

Affinity of Porous Film for Electrolytic Solution:

A porous film was sandwiched between two plates each having a hole with a diameter of 15 mm. This sandwich was immersed in γ-butyrolactone, which is an organic solvent for use in electrolytic solutions, and the value of resistance was measured between both sides of the porous film. On the other hand, the value of resistance in the case where the porous film was not interposed (i.e., the resistance of the electrolytic solution) was measured. The product of the difference between the two values of resistance and the measuring area was calculated and taken as the resistance value. The time required for the change of this resistance value to become 0.1 $\Omega \cdot cm^2/sec$ or less was taken as a measure of the affinity of the porous film for the electrolytic solution. The shorter the time, the higher the affinity of the porous film for the electrolytic solution.

Analysis of Ether Multicomponent Polymer:

The composition of an ether multicomponent polymer in terms of monomer proportion was determined from a proton NMR spectrum.

The weight average molecular weight of an ether multicomponent polymer was measured by gel permeation chromatography and calculated for standard polystyrene. The measurement by gel permeation chromatography was made at 60°C with gel permeation chromatograph RID-6A, manufactured by Shimadzu Corp., using columns "Shodex" KD-807, KD-806, KD-806M, and KD-803, manufactured by Showa Denko K.K., and dimethylformamide as a solvent.

REFERENCE EXAMPLE 1

Preparation of Catalyst for Ether Multicomponent Polymer Production:

Into a three-necked flask equipped with a stirrer, thermometer, and distiller were introduced 10 g of tributyltin chloride and 35 g of tributyl phosphate. The contents were heated at 250°C for 20 minutes with stirring in a nitrogen stream to distill off vaporizable components. Thus, a solid condensate was obtained as a residue. This organotin-phosphoric ester condensate was used as a catalyst in the following syntheses.

PRODUCTION EXAMPLE 1

Production of Ether Multicomponent Polymer A:

The atmosphere in a four-necked glass flask having a capacity of 3 liters was replaced with nitrogen. Into this flask were introduced 0.3 g of the organotin-phosphoric ester condensate as a catalyst, 75 g of the glycidyl ether compound represented by the following formula (5)

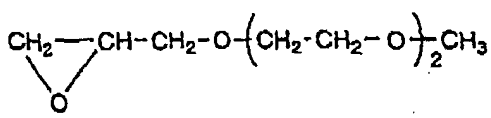

(5)

regulated so as to have a water content of 10 ppm or lower, and 2,000 g of n-hexane as a solvent. Thereto was gradually added 325 g of ethylene oxide while following the conversion into polymer of the glycidyl ether compound by gas chromatography. The polymerization reaction was terminated with methanol. After completion of the polymerization, the polymer yielded was taken out by decantation and subsequently dried first at ordinary pressure and 40°C for 24 hours and then at a reduced pressure and 45°C for 10 hours. Thus, an ether multicomponent polymer A was obtained in an amount of 380 g.

This ether multicomponent polymer A had a weight average molecular weight of $2.8 \times 10^6$. The composition of this ether multicomponent polymer A in terms of monomer unit proportion (molar ratio) as determined from a proton NMR spectrum was such that glycidyl ether compound (5)/ethylene oxide = 5/95.

PRODUCTION EXAMPLE 2

Production of Ether Multicomponent Polymer B:

The same procedure as in Production Example 1 was conducted, except that the amounts of the glycidyl ether compound represented by formula (5) and ethylene oxide were changed to 200 g each. Thus, an ether multicomponent polymer B was obtained in an amount of 385 g.

This ether multicomponent polymer B had a weight average molecular weight of $2.1 \times 10^6$. The composition of this ether multicomponent polymer B in terms of monomer unit proportion (molar ratio) as determined from a proton NMR spectrum was such that glycidyl ether compound (5)/ethylene oxide = 19/81.

PRODUCTION EXAMPLE 3

Production of Ether Multicomponent Polymer C:

The same procedure as in Production Example 1 was conducted, except that the amounts of the glycidyl

ether compound represented by formula (5) and ethylene oxide were changed to 110 g and 290 g, respectively. Thus, an ether multicomponent polymer C was obtained in an amount of 380 g.

This ether multicomponent polymer C had a weight average molecular weight of $3.2 \times 10^6$. The composition of this ether multicomponent polymer C in terms of monomer unit proportion (molar ratio) as determined from a proton NMR spectrum was such that glycidyl ether compound (5)/ethylene oxide = 12/88.

EXAMPLE 1

To 85 parts by weight of a liquid paraffin (dynamic viscosity at 40°C, 59 cSt) were added 13.5 parts by weight of an ultrahigh molecular weight polyethylene resin having a weight average molecular weight of $1.1 \times 10^6$ and a melting point of 135°C and 1.5 parts by weight of ether multicomponent polymer A to obtain a slurry. This slurry was fed to a small kneader and kneaded with heating at 160°C for 1 hour. The resulting kneading product was cooled by being sandwiched between metal plates cooled beforehand to -20°C to thereby obtain a gel-state sheet having a thickness of 5 mm.

This gel-state sheet was spread by pressing with a hot press at a temperature of 120°C until the thickness thereof was reduced to 0.8 mm, and then subjected to simultaneous biaxial stretching at a temperature of 125°C and a stretch ratio of 3.5 in each of the machine and transverse directions. The overall stretch ratio was 77. Subsequently, the resulting stretched film was immersed in heptane to conduct solvent removal, and the film obtained was heat-treated at 127°C for 20 minutes to obtain a porous film according to the invention. In Table 1 are shown the thickness, porosity, air permeability, piercing strength, and average pore diameter of this porous film and the affinity thereof for an electrolytic solution.

EXAMPLE 2

A porous film according to the invention was obtained in the same manner as in Example 1, except that 14.5 parts by weight of an ultrahigh molecular weight polyethylene resin having a weight average molecular weight of $2.0 \times 10^6$ and a melting point of 136°C and 0.5 parts by weight of ether multicomponent polymer B were used and that the heat treatment was conducted at 130°C for 20 minutes. In Table 1 are shown the thickness, porosity, air permeability, piercing strength, and average pore diameter of this porous film and the affinity thereof for an electrolytic solution.

EXAMPLE 3

To 85 parts by weight of a liquid paraffin were added 12.0 parts by weight of an ultrahigh molecular weight polyethylene resin having a weight average molecular weight of $1.2 \times 10^6$ and a melting point of 135°C and 3.0 parts by weight of ether multicomponent polymer C to obtain a slurry. This slurry was fed to a twin-screw extruder, kneaded with heating, and then extruded through a die into a sheet having a thickness of 5 mm. The extrudate was rapidly cooled to obtain a gel-state sheet. This sheet was subjected to spreading by pressing and to simultaneous biaxial stretching and solvent removal under the same conditions as in Example 1 and then heat-treated at 115°C for 20 minutes to obtain a porous film according to the invention. In Table 1 are shown the thickness, porosity, air permeability, piercing strength, and average pore diameter of this porous film and the affinity thereof for an electrolytic solution.

COMPARATIVE EXAMPLE 1

To 85.0 parts by weight of a liquid paraffin was added 15.0 parts by weight of an ultrahigh molecular weight polyethylene resin having a weight average molecular weight of $1.2 \times 10^6$ and a melting point of 135°C to obtain a slurry. This slurry was fed to a small kneader and kneaded with heating at 160°C for 1 hour. The resultant kneading product was cooled by being sandwiched between metal plates cooled beforehand to -20°C to thereby obtain a gel-state sheet having a thickness of 5 mm.

This gel-state sheet was spread by pressing with a hot press at a temperature of 120°C until the thickness thereof was reduced to 0.8 mm, and then subjected to simultaneous biaxial stretching at a temperature of 125°C and a stretch ratio of 3.5 in each of the machine and transverse directions. The overall stretch ratio was 77. Subsequently, the resulting stretched film was immersed in heptane to conduct solvent removal, and the film obtained was heat-treated at 127°C for 20 minutes to obtain a porous film.

The thus-obtained porous film had a poor affinity for an electrolytic solution because it consisted only of the ultrahigh molecular weight polyethylene resin. In Table 1 are shown the thickness, porosity, air permeability, piercing strength, and average pore diameter of this porous film and the affinity thereof for an electrolytic solution.

COMPARATIVE EXAMPLE 2

To 85.0 parts by weight of a liquid paraffin (dynamic viscosity at 40°C, 59 cSt) were added 9.0 parts by weight of an ultrahigh molecular weight polyethylene resin having a weight average molecular weight of $2.0x10^6$ and a melting point of 136°C and 6.0 parts by weight of ether multicomponent polymer B to obtain a slurry. This slurry was fed to a small kneader and kneaded with heating at 160°C for 1 hour. The resultant kneading product was cooled by being sandwiched between metal plates cooled beforehand to -20°C to thereby obtain a gel-state sheet having a thickness of 5 mm.

This gel-state sheet was spread by pressing with a hot press at a temperature of 120°C until the thickness thereof was reduced to 0.8 mm, and then subjected to simultaneous biaxial stretching at a temperature of 125°C and a stretch ratio of 3.5 in each of the machine and transverse directions. The overall stretch ratio was 77. Subsequently, the resulting stretched film was immersed in heptane to conduct solvent removal, and the film obtained was heat-treated at 127°C for 20 minutes to obtain a porous film.

In this Comparative Example, ether multicomponent polymer B was used in an amount as large as above 30% by weight based on the high molecular weight polyethylene resin. Because of this, the ether multicomponent polymer had poor dispersibility in the high molecular weight polyethylene resin and, hence, a homogeneous porous film could not be obtained. The porosity and air permeability of the film obtained above are shown in Table 1.

COMPARATIVE EXAMPLE 3

Using a twin-screw extruder, 90.0 parts by weight of a high density polyethylene resin having a weight average molecular weight of $2.0x10^5$ and a melting point of 136°C was kneaded at 200°C together with 10.0 parts by weight of ether multicomponent polymer A. The resulting kneading product was extruded through a die into a sheet having a thickness of 0.1 mm, and this sheet was uniaxially stretched at 125°C.

In Comparative Example 3, the high density polyethylene resin was used in place of a high molecular weight polyolefin resin and no solvent was used in kneading this resin together with ether multicomponent polymer A. Because of this, the polymer in the resulting kneading product was present as coarse gel particles of several tens of micrometers dispersed in the polyethylene resin. This kneading product could not give a homogeneous porous film through extrusion molding with the twin-screw extruder. Furthermore, since the sheet obtained was incapable of being stretched at a high ratio, a thin porous film having high strength could not be obtained. Specifically, stretching the sheet at stretch ratios not lower than 10 gave stretched films which had broken partially.

Part (thickness, 55 μm; porosity, 43%) of the films which had not broken was examined for piercing strength. As a result, the piercing strength thereof was found to be 2 N.

Table 1

| | Example | | | Comparative Example | | |
|---|---|---|---|---|---|---|
| | 1 | 2 | 3 | 1 | 2 | 3 |
| Thickness (μm) | 22 | 17 | 19 | 15 | uneven | uneven |
| Porosity (%) | 46 | 43 | 41 | 43 | 20 | - |
| Air permeability (sec/100 ml) | 210 | 230 | 557 | 186 | ≥1000 | - |
| Piercing strength (N) | 5 | 6 | 7 | 6 | - | - |
| Average pore diameter (μm) | 0.015 | 0.020 | 0.015 | 0.020 | - | - |
| Affinity for electrolytic solution (sec) | 5 | 10 | 2 | 16 | - | - |

As described above, a porous film is obtained according to the process of the invention by heating a high molecular weight polyolefin resin comprising an ultrahigh molecular weight polyolefin resin in a solvent together with a polymer having a chain oligo (alkylene oxide) structure in side chains to obtain a kneading product, forming the resulting kneading product into a gel-state sheet, rolling and/or stretching the sheet, and then subjecting it to a solvent-removing treatment.

The porous film of the invention thus obtained is thin and has excellent strength and an excellent affinity for electrolytic solutions. The porous film is hence suitable for use as, e.g., a battery separator, in particular, a separator for lithium ion batteries. It is suitable also for use as a separator for capacitors.

**Claims**

1. A porous film comprising a resin composition which comprises from 70 to 99.9% by weight of a high molecular weight polyolefin resin and from 0.1 to 30% by weight of a polymer having a polyacrylate, polymethacrylate, poly (ethylene oxide) , poly(propylene oxide), poly(ethylene propylene oxide), polyphosphazene, poly(vinyl ether) or polysiloxane structure as or in a main chain and having a chain oligo(alkylene oxide) structure in side chains.

2. The porous film of claim 1, wherein the high molecular weight polyolefin resin comprises at least 30% by weight of a ultrahigh molecular weight polyolefin resin having a weight average molecular weight of $1.0x10^6$ or higher.

3. The porous film of claim 1, wherein the polymer is a polyether having a poly(ethylene oxide), poly(propylene oxide) or poly(ethylene propylene oxide) structure as or in a main chain and having a chain oligo (alkylene oxide) structure in side chains.

4. The porous film of claim 1, wherein the polymer is an ether multicomponent polymer having a weight average molecular weight in the range of from $10^4$ to $10^7$ formed from monomer components comprising from 1 to 99% by mole of a component represented by the following formula (1) and from 99 to 1% by mole of a component represented by the following formula (2), the repeating structural units derived from the two compoents being represented by the following formulae (3) and (4) :

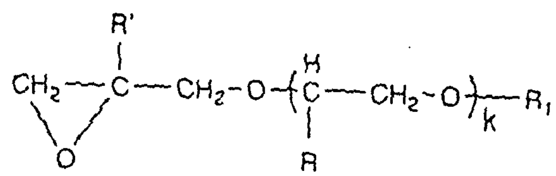
(1)

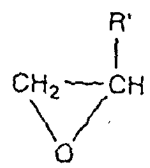
(2)

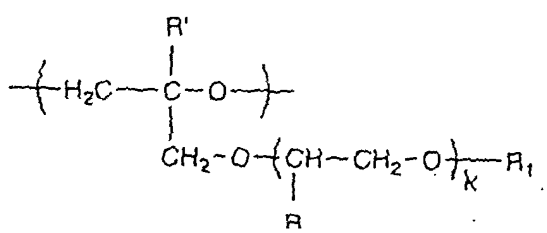
(3)

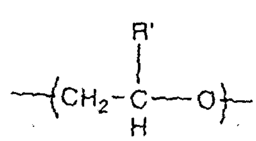
(4)

wherein in formulae (1) and (3), R and R' each independently represent a hydrogen atom or a methyl group, $R_1$ represents a group selected from the group consisting of an alkyl group having 1 to 12 carbon atoms, an alkenyl group having 2 to 8 carbon atoms, a cycloalkyl group having 3 to 8 carbon atoms, an aryl group having 6 to 14

carbon atoms, and an aralkyl group having 7 to 12 carbon atoms, and k, indicating the degree of polymerization of the oxyalkylene unit constituting a side chain part, is from 1 to 12; and in formulae (2) and (4), R' represents a hydrogen atom or a methyl group.

**5.** A process for producing a porous film which comprises: heating and kneading in a solvent from 70 to 99.9% by weight of a high molecular weight polyolefin resin and from 0.1 to 30% by weight of a polymer having a polyacrylate, polymethacrylate, poly(ethylene oxide) , poly(propylene oxide), poly(ethylene propylene oxide), polyphosphazene, poly(vinyl ether) or polysiloxane structure as or in a main chain and having a chain oligo(alkylene oxide) structure in side chains to thereby obtain a kneaded product; forming the kneaded product into a gel-state sheet; rolling and/or stretching the sheet; and then subjecting the sheet to a solvent-removing treatment.

**6.** The process for producing a porous film of claim 5, wherein the high molecular weight polyolefin resin comprises at least 30% by weight of an ultrahigh molecular weight polyolefin resin having a weight average molecular weight of $1.0x10^6$ or higher.

**7.** The process for producing a porous film of claim 5, wherein the polymer is a polyether having a poly(ethylene oxide) , poly(propylene oxide) or poly (ethylene propylene oxide) structure as or in a main chain and having a chain oligo (alkylene oxide) structure in side chains.

**8.** The process for producing a porous film of claim 5, wherein the polymer is an ether multicomponent polymer having a weight average molecular weight in the range of from $10^4$ to $10^7$ formed from monomer components comprising from 1 to 99% by mole of a component represented by the following formula (1) and from 99 to 1% by mole of a component represented by the following formula (2), the repeating structural units derived from the two components being represented by the following formulae (3) and (4):

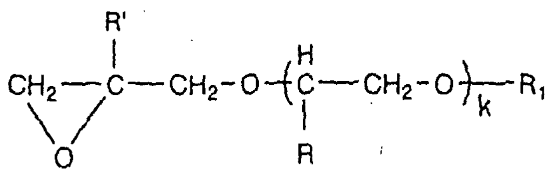

(1)

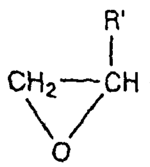

(2)

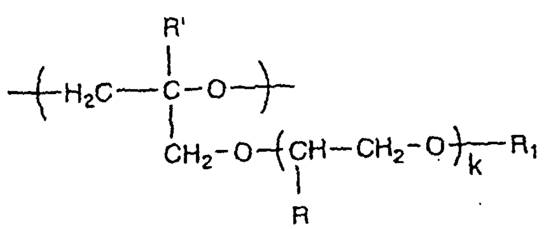

(3)

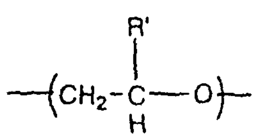

(4)

wherein in formulae (1) and (3), R and R' each independently represent a hydrogen atom or a methyl group, $R_1$ represents a group selected from the group consisting of an alkyl group having 1 to 12 carbon atoms, an alkenyl group having 2 to 8 carbon atoms, a cycloalkyl group having 3 to 8 carbon atoms, an aryl group having 6 to 14 carbon atoms, and an aralkyl group having 7 to 12 carbon atoms, and k, indicating the degree of polymerization of the oxyalkylene unit constituting a side chain part, is from 1 to 12; and in formulae (2) and (4), R' represents a hydrogen atom or a methyl group.

**9.** The process for producing a porous film of claim 5, wherein the rolling and/or stretching is conducted so as to result in an overall stretch ratio of 25 or more.

**10.** A separator comprising the porous film of claim 1.

**11.** A battery employing the separator of claim 10.

**12.** A capacitor employing the separator of claim 10.

European Patent Office

# EUROPEAN SEARCH REPORT

Application Number
EP 02 00 4420

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 00 63292 A (DAISOW CO LTD ;MATSUI SHOUHEI (JP); MIURA KATSUHITO (JP); TABUCHI) 26 October 2000 (2000-10-26) & EP-A-1123948 * claim 1 * --- | 1-12 | C08J5/18 C08J9/28 |
| A | PATENT ABSTRACTS OF JAPAN vol. 012, no. 479 (C-552), 14 December 1988 (1988-12-14) & JP 63 193954 A (HITACHI MAXELL LTD), 11 August 1988 (1988-08-11) * abstract * ----- | 1-12 | |
| | | | TECHNICAL FIELDS SEARCHED (Int.Cl.7) |
| | | | C08J |

The present search report has been drawn up for all claims

| Place of search | Date of completion of the search | Examiner |
|---|---|---|
| MUNICH | 23 May 2002 | Natus, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 00 4420

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2002

| Patent document cited in search report | | Publication date | Patent family member(s) | | Publication date |
|---|---|---|---|---|---|
| WO 0063292 | A | 26-10-2000 | JP | 2000306425 A | 02-11-2000 |
| | | | EP | 1123948 A1 | 16-08-2001 |
| | | | WO | 0063292 A1 | 26-10-2000 |
| JP 63193954 | A | 11-08-1988 | NONE | | |

EPO FORM P0459

For more details about this annex : see Official Journal of the European Patent Office, No. 12/82